**Europäisches Patentamt**

**European Patent Office**

**Office européen des brevets**

(19)

(11) Publication number: **0 207 673**
**A1**

## (12) EUROPEAN PATENT APPLICATION

(21) Application number: **86304603.3**

(22) Date of filing: **16.06.86**

(51) Int. Cl.4: **B01J 8/02** , **C10G 9/18**

(30) Priority: **28.06.85 US 749836**

(43) Date of publication of application:
**07.01.87 Bulletin 87/02**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Delikat, Edward Paul**
**6 Teak Court**
**Medford New Jersey 08055(US)**

(74) Representative: **West, Alan Harry**
**Mobil Court 3 Clements Inn**
**London WC2A 2EB(GB)**

(54) **Liquid distributor and use thereof.**

(57) A liquid distributor for downflow reactors and towers is disclosed. The invention employs a bent periphery pipe beneath a tray located within a vessel. A bed of solids is located below the tray. Periphery pipes distribute liquid to an area of the bed which previously did not receive liquid from the distributor tray. The periphery pipe may have a vapor outlet with an adjacent splash plate and a separate liquid outlet. The splash plate prevents liquid from splashing out of the vapor outlet onto the vessel wall. Liquid may be directed from the periphery pipe to the bed of solids, particu-larly solid catalysts, therebelow and prevented from impacting the sidewalls of the vessel. A trough, attached to the tray, may be substituted for the periphery pipe.

FIG. 1

EP 0 207 673 A1

## LIQUID DISTRIBUTOR AND USE THEREOF

The present invention pertains to liquid distribution in two-phase downflow reactors and towers.

Two-phase downflow reactors are important for both chemical and petroleum processing. For example, catalytic hydrocarbon dewaxing to produce lube oils employs a fixed-bed two-phase downflow reactor.

Liquid distributor trays for two-phase downflow reactors and towers have historically avoided distribution of liquid near the wall of the vessel. There was difficulty in placing liquid distribution points near the wall because of the proximity of a tray support ring. An annular space of unused catalyst near the wall beneath the distributor tray results from such a design.

U. S. Patent No. 3,378,349 to Shirk shows distribution of liquid from a smaller diameter tray onto the surface of a larger diameter bed below. The tray's diameter is less than the bed's diameter because the tray is mounted within the vessel's hemispherical head. This tray has a number of downflow conduits. Some of these downflow conduits are straight pipes extending directly from a tray opening to a discharge location vertically below, and the remaining downflow conduits comprise offset pipes extending from a tray opening to a horizontally displaced discharge location below. Thus, for this uppermost tray, at least some of the drainpipes will be of the offset type, so as to reach the outermost portions of the bed surface. The apparatus also comprises lower trays, which have only straight pipes.

This apparatus has several disadvantages. The offset conduits are no closer to the vessel sidewall than the vertical conduits of the lower trays. No attempt is made to keep liquid off the wall while delivering liquid onto the bed near the wall. Fig. 1 of this patent reveals that liquid can easily get onto the wall either by splashing off of a baffle 45, located below the outlet of the offset conduit, or by becoming entrained in the vapor phase exiting the open trough or pipe 44, and blowing onto the wall. The baffle 45 is provided at the discharge end of each downflow pipe or conduit to deflect and distribute the fluid laterally. It is undesirable to splash liquid on the vessel walls because of channeling of liquid down the walls. This prevents effective contact of the liquid with the catalyst or other solids located in the bed below the tray.

It was believed that in downflow reactors having sidewalls with a distributor tray above a bed of catalyst the liquid poured from the tray to the bed and spread radially out and down. This spreading movement was thought to fill most of the annular space between the vessel wall and the point at which the liquids contacted the catalyst bed below the tray. This radial spreading of liquid has been found to be slow, or non-existent, in some situations. As a result, the annular space near the wall is filled with gas for a considerable distance into the bed, or even through the entire bed. The catalyst in the annular space does not contact liquid, and thus is not utilized.

It would be desirable to provide a means for contacting a liquid with the unused portion of catalyst in the annulus adjacent the sidewall of a vessel containing a bed of catalyst, while preventing contact of the liquid with the sidewall.

Accordingly, the present invention provides an apparatus for distributing liquid from a plate 10 having a hole 3 therethrough and located within a vessel 6 provided with sidewalls 8 and containing a bed of solids 5 below the plate 10, characterized by a down conduit 25 for passing liquid down through the hole 3, a horizontal conduit for passing liquid horizontally from the hole and having an inlet connective with the down conduit 25; and an outlet connective with a flow director 40 which directing the liquid near but spaced from the sidewall 8 to contact a portion of bed 5 adjacent said vessel sidewall 8.

The invention is particularly valuable when employed in a reactor vessel containing a bed of solid catalyst because it is expensive and inefficient when reactants passing through the vessel cannot contact a portion of the catalyst.

Fig. 1 is a schematic of the top portion of a reactor using the liquid distributor of the present invention;

Fig. 2 is a detailed view of the embodiment shown in Fig. 1;

Fig. 3 shows a second embodiment of the invention;

Fig. 4 shows a third embodiment of the invention employing an open channel member;

Fig. 5 shows a fourth embodiment of the invention employing an open channel member;

Fig. 6 shows a fifth embodiment of the invention employing a flat plate;

Fig. 7 shows a side view of a sixth embodiment of the invention employing a trough; and

Fig. 8 shows a cross-sectional view of the sixth embodiment taken along the lines 8-8 of Fig. 7.

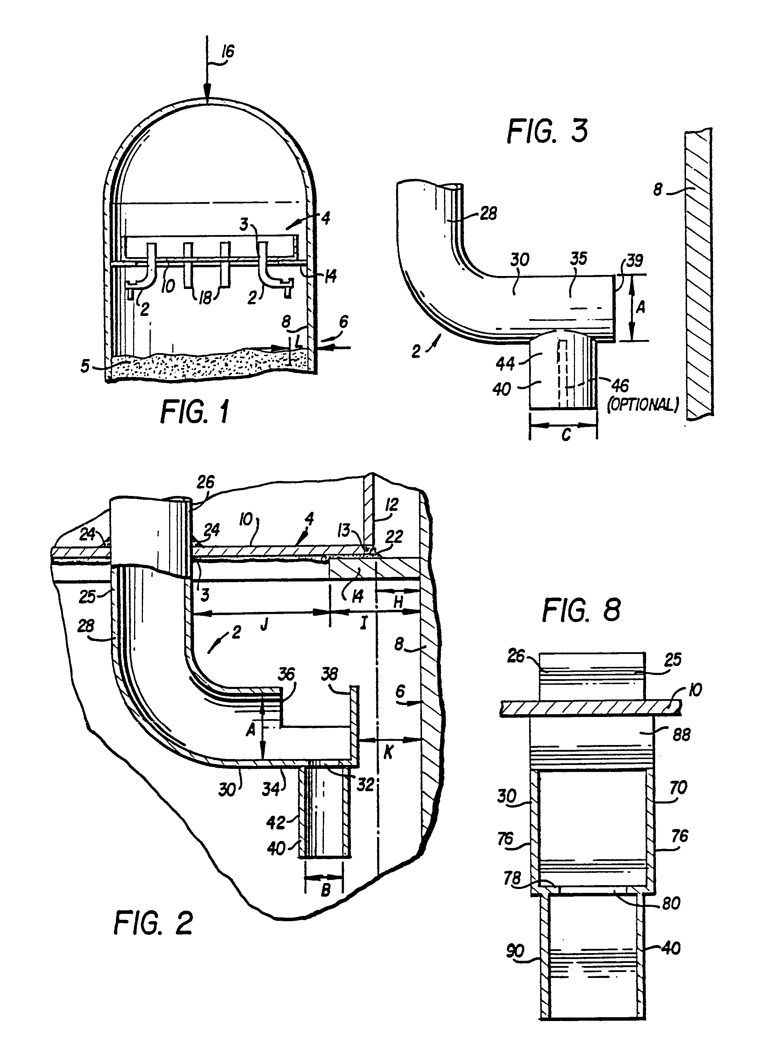

Fig. 1 shows a first embodiment of the present invention. A periphery downcomer 2 is attached to the perimeter of a hole 3 of a distributor tray 4. The distributor tray 4 is located within a reactor vessel 6 having sidewalls 8. The distributor tray 4 is supported on a support ring 14 and located above a fixed bed of solids 5 such as catalyst or packing such as Raschig rings. A two-phase downflow stream 16 comprising liquid and vapor is fed through the top of vessel 6. However, the present invention may also be used even if the stream 16 only comprises liquid. Counter-current flows are also possible. In addition to the periphery downcomers 2, the tray 4 has conventional downcomers 18 located further away from the periphery of the tray 4 than the periphery downcomers 2.

As shown in more detail in Fig. 2, the distributor tray 4 has a distributor plate 10 attached to a liquid retention wall 12 by a weld 13. The support ring 14 is attached to the sidewalls 8 of the vessel 6. A support ring gasket 22 is located between the tray 4 and the support ring 14.

The periphery downcomer 2 is a bent pipe which has a downwardly directed conduit 25 attached to a horizontally directed conduit 30. The conduit 25 is an enclosed pipe in this embodiment. The conduit 25 is attached to the distributor tray 10 by one or more welds 24. The conduit 25 includes an upper portion 26 which extends upwardly from plate 10, and a lower portion 28 which extends downwardly from plate 10. Typically a layer of liquid (not shown) from stream 16 is retained on the tray 4. The upper portion 26 is provided with conventional weirs, orifices, notches, etc. (not shown) for communicating with the liquid layer and the atmosphere of the vessel 6. The liquid retention wall 12 extends a greater distance above the plate 10 than does the upper portion 26 of conduit 25.

The horizontal conduit 30 is shown as a non-enclosed horizontal pipe 34. The horizontal pipe 34 is provided with a lower opening 32 and an upper opening 36. The liquid from stream 16 passes through lower opening 32 into flow director 40, shown in Fig. 2 as a vertical straightening pipe 42 having a diameter B and cross-sectional area less than diameter A and cross-sectional area, respectively, of the horizontal pipe 34. The smaller cross-sectional area of pipe 42 encourages vapor to exit up through opening 36. The pipe 42 must be long enough and have a sufficiently small cross-sectional area, to direct the liquid vertically down by negating any residual horizontal velocity which the liquid had from passing through pipe 34.

A minor portion of liquid may be entrained through upper opening 36. Splash plate 38, attached to the downstream end of pipe 34 between opening 36 and sidewall 8 prevents liquid from splashing out of opening 36 onto the vessel sidewall 8. Splashing onto the sidewall 8 is undesirable because splashed liquid channels along the wall and does not effectively contact the bed 5.

Pipe 42 directs liquid down to bed 5 below the support ring 14. As shown in Fig. 2, the pipe 42 is parallel to sidewall 8. Pipe 42 may be tilted toward sidewall 8 to direct the liquid toward, but not on the sidewall 8. Pipe 40 should generally direct the liquid to hit the catalyst bed a distance L of 1 to 5 cm away from the sidewall 8. The cross-sectional area of pipe 42 shuld be smaller than that of horizontal pipe 34 to encourage vapor to exit upwardly through opening 36.

The liquid retention wall 12 is typically spaced a distance H, 1 to 4 cm, away from vessel wall 8 at room temperature. The space H is provided because tray 4 expands faster than the vessel 6 during start-up. Eventually, vessel 6 expands so at equilibrium the space H returns. The tray 4 rests on the support ring 14. The dimensions of the support ring 14 vary with the diameter of the vessel 6, and the materials of construction of vessel 6 and its internal structures such as the plate 10. Typically, the support ring 14 is an annulus having a measurement I, which is about double the spacing H of the retention wall 12 from the vessel sidewall 8 at room temperature. Typically, the periphery pipe 2 is spaced a distance J from the support ring 14 to account for expansion, wherein the distance J is at least 1 to 4 cm (1/2" to 1-1/2"), depending upon the diameter and materials of construction of the vessel 6. The horizontal conduit 30 and liquid flow director 40 are near the sidewall 8, but spaced a distance K from the sidewall 8 at room temperature to allow for thermal expansion. Distance K is greater than or equal to distance H. Typically, distance K ranges from 1 to 5 cm (1/2" to 2").

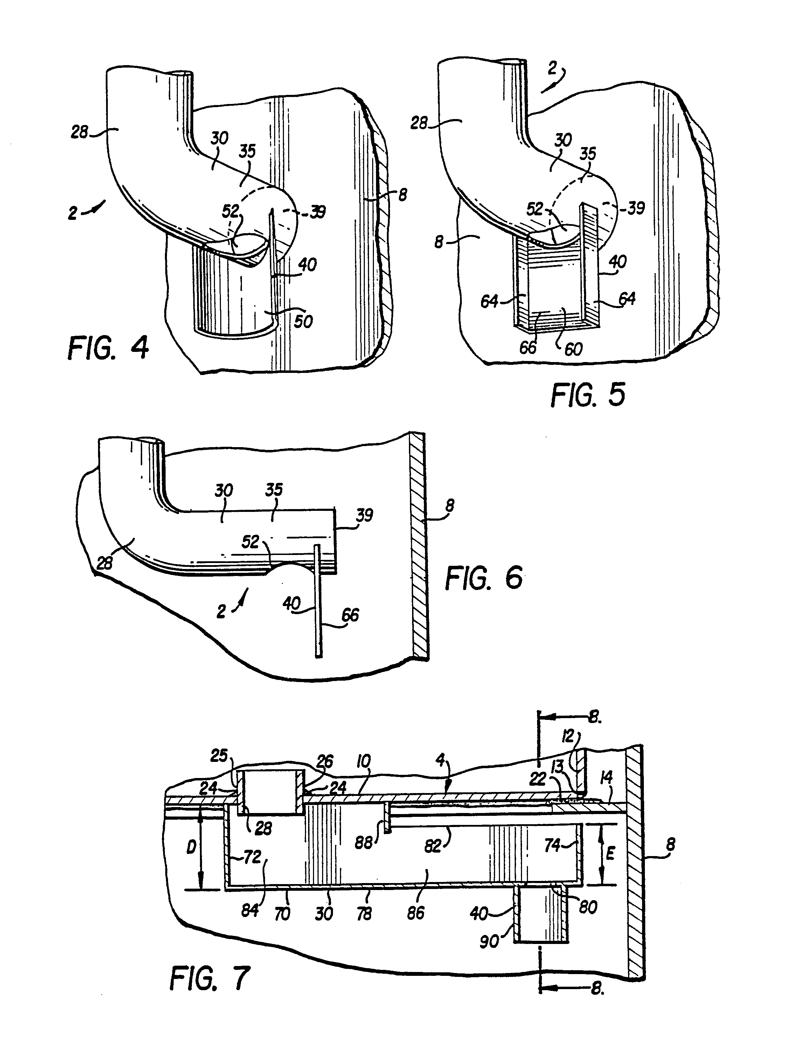

Fig. 3 shows a second embodiment of the present invention. Horizontal conduit 30 is an enclosed horizontal pipe 35 which has an end wall 39 at its downstream end. There is no upper opening 36 as in Fig. 2. Attached to pipe 35 is flow director 40, a vertical straightening pipe 44 of diameter C and cross-sectional area, which may be equal to the diameter A and cross-sectional area, respectively, of pipe 35. Liquid and vapor pass down through pipe 44 via a lower opening 52, not shown in Fig. 3, but shown in Figs. 4-6. Optional vertical baffle 46 attached to the inner walls of pipe 44 directs the liquid down so it does not contact the sidewall 8 prior to contacting catalyst. Flow director 40 is spaced at least the distance H from the sidewall 8 to allow for thermal expansion. This spacing helps liquid from the flow director 40 contact the bed 5 the distance L from the sidewall 8.

There is no upper opening 36, as in Fig. 2 so the cross-sectional area of the pipe 44 is sufficient for passing both liquid and vapor.

Figs. 4-6 respectively show third, fourth and fifth embodiments of the invention wherein flow director 40 is an open channel member 50, 60, 66 respectively, attached to the horizontal pipe 35. The open channel member directs the liquid near but spaced from the vessel sidewall 8 to a portion of the bed 5 adjacent the vessel sidewall 8. The members 50, 60, 66 are open facing the longitudinal axis of the vessel 6. Fig. 4 shows the flow director 40 is a curved open channel member 50 attached to pipe 35 between opening 52 and sidewall 8. The Fig. 5 flow director 40 is a rectangular open channel member 60. The channel member 60 comprises a flat plate 66 attached to flanking side plates 64. Fig. 6 shows the embodiment of Fig. 5 employing only the flat plate 66.

An upper opening 36, as in the embodiment of Fig. 2, is optional for the embodiments of Figs. 4-6 employing open channel members.

Figs. 7 and 8 show cross-sectional side and front views, respectively, of a sixth embodiment of the invention wherein the horizontal conduit 30 is a trough 70 attached directly to the plate 10. The trough 70 is generally rectangular and comprises a front wall 72 at its upstream end, sidewalls 76, a bottom wall 78, and a back wall 74 at its downstream end. The front wall 72 has a height D which is greater than a height E of the back wall 74. The sidewalls 76 have upstream portions 84 attached to the front wall 72 and flush with the front wall 72. The sidewalls 76 also have downstream portions 86 attached to the back wall 74 and flush with the back wall 74. Trough 70 has an upper wall 88 attached to the upstream portion 84 of sidewalls 76. The front wall 72 and the upstream portion 84 are attached to the distributor plate 10. The bottom wall 78 is attached to the front wall 72 and the trough sidewalls 76. The trough 70 communicates with flow director 40 through a lower opening 80. The lower opening 80 is circular but any suitable shape may be employed. Flow director 40 in Figs. 7 and 8 is an enclosed circular pipe 90. As shown in Fig. 7, flow director 40 is attached to the bottom wall 78 which is attached to the back wall 74. As an alternate embodiment (not shown), flow director 40 and lower opening 80 could be rectangular moved horizontally to contact back wall 74, and the lower opening 80 could space the bottom wall 78 from the back wall 74.

The two-phase downflow stream 16 enters the upper portion 26 of conduit 25. Conduit 25 contains lower portion 28 which extends below the plate 10. The stream 16 passes through conduit 25, into the trough 70. The downstream portion of the trough may have upper opening 82 to allow vapor to escape up and be separated from liquid in the stream 16. The back wall 74 functions like the splash plate 38 of the embodiment of Fig. 2, and prevents splashing of liquid from trough 70 onto the sidewalls 8. The liquid then passes through the lower opening 80 to the enclosed pipe 90. However, any of the various embodiments of flow director 40, described above, as well as equivalents thereof, may be employed by the embodiment of the invention shown in Figs. 7 and 8.

Example 1

Example 1 shows how much catalyst is bypassed by downflow liquid from a liquid distribution tray employing a conventional (straight) downcomer located in a hole closest the vessel sidewall.

Vessel Inside Diameter (i.d.) = (12.0 feet)      3.6576 m

Support Ring Annulus = (2.0 inches)      0.0508 m

Distance of Liquid Retention Wall
    from Vessel Wall = (1.0 inch)      0.0254 m

Distance of Conventional (Straight)
    Downcomer from Vessel Sidewall = (3.0 inches (0.25 feet)) 0.0762 m

% of Catalyst Uncontacted =

$$= \frac{(3.6576 \text{ m})^2 - (3.5994 \text{ m})^2}{(3.6576 \text{ m})^2} \times 100\%$$

$$= 4.12\%$$

## Example 2

Example 2 shows how much additional catalyst is contacted by employing the same vessel, tray and support ring as in Example 1, with downward flow adjacent to the vessel sidewalls, as disclosed by the present invention.

| | | |
|---|---|---|
| Vessel Inside Diameter (i.d.) | = (12.0 feet) | 3.6576 m |
| Support Ring Annulus | = (2.0 inches) | 0.0508 m |
| Distance of Liquid Retention Wall from Vessel Wall | = (1.0 inch) | 0.0254 m |
| Distance of Flow Director 40 from Vessel Sidewall | = (1.0 inch (0.0833 feet)) | 0.0254 m |

% of Catalyst Uncontacted

$$= \frac{(3.6576 \text{ m})^2 - (3.6322 \text{ m})^2}{(3.6576 \text{ m})^2} \times 100\%$$

$$= 1.38\%$$

% of Additional Catalyst Contacted

= % Uncontacted in Example 1 -% Uncontacted in Example 2

= 4.12% -1.38%

= 2.74%

## Claims

1. An apparatus for distributing liquid from a plate 10 having a hole 3 therethrough and located within a vessel 6 provided with sidewalls 8 and containing a bed of solids 5 below the plate 10, characterized by a down conduit 25 for passing liquid down through the hole 3; a horizontal conduit 30 for passing liquid horizontally from the hole and having an inlet connective with the down conduit 25; and an outlet connective with a flow director 40 which directs the liquid near but spaced from the sidewall 8 to contact a portion of bed 5 adjacent the vessel sidewall 8.

2. The apparatus of Claim 1 further characterized in that the down conduit 25 comprises an enclosed lower portion 28 which extends down from plate 10, and is attached to the plate 10 at the perimeter of the hole 3, and the horizontal conduit 30 is attached to a downstream end of the down conduit 25.

3. The apparatus of Claim 2 further characterized in that the down conduit 25 comprises an upper portion 26 which extends up from hole 3, into the atmosphere of vessel 6.

4. The apparatus of Claim 3 further characterized in that the horizontal conduit 30 has an upper opening 36 for permitting vapor to escape up from the conduit.

5. The apparatus of Claim 4 further characterized in that a splash plate 38 is attached to the horizontal conduit 30 and located between the upper opening 36 and sidewall 8.

6. The apparatus of Claim 5 further characterized in that the flow director 40 comprises a second enclosed conduit 42 having an inner cross-sectional area less than that of the horizontal conduit.

7. The apparatus of Claim 1 further characterized in that the flow director 40 comprises an open channel 50, 60, 66 having an open portion facing the longitudinal axis of vessel 6.

8. The apparatus of Claim 2 or 3 further characterized in that flow director 40 comprises a second enclosed conduit 44 which directs the liquid and vapor downwardly.

9. The apparatus of Claim 8 further characterized by a vertical baffle 46 within and attached to conduit 44.

10. The apparatus of Claim 1 further characterized in that flow director 40 comprises a downcomer plate 66 which allows liquid to contact a wall of the plate facing the longitudinal axis of vessel 6.

11. The apparatus of Claim 1 further characterized in that the horizontal conduit 30 comprises a trough 70 comprising a front wall 72 at the upstream end, trough sidewalls 76, a bottom wall 78, and a back wall 74 at its downstream end, the front wall 72 being longer than the back wall 74, the upstream portion of the trough sidewalls 76 being attached to the front wall 72 and flush therewith, the downstream portion of the trough sidewalls 76 being attached to and flush with the back wall 74, the front wall 72 and the upstream portion being attached to the plate 10, and the bottom wall 78 being attached to the front wall 72 and trough sidewalls 76.

12. The apparatus of Claim 11 further characterized in that the trough 70 has an upper opening 82 for upwardly exiting vapor from the trough 70.

FIG. 1

FIG. 3

FIG. 2

FIG. 8

FIG. 4

FIG. 5

FIG. 6

FIG. 7

| Category | Citation of document with indication, where appropriate, of relevant passages | Relevant to claim | CLASSIFICATION OF THE APPLICATION (Int. Cl.4) |
|---|---|---|---|
| A | GB - A - 2 065 492 (UOP)<br>    * Claims *<br><br>       -- | 1 | B 01 J 8/02<br>C 10 G 9/18 |
| D,A | US - A - 3 378 349 (SHIRK)<br>    * Fig. 3; claims *<br><br>       ---- | 1 | |

**DOCUMENTS CONSIDERED TO BE RELEVANT**     EP 86304603.3

**TECHNICAL FIELDS
SEARCHED (Int. Cl.4)**

B 01 J
C 10 G

The present search report has been drawn up for all claims

| Place of search | Date of completion of the search | Examiner |
|---|---|---|
| VIENNA | 14-10-1986 | TENGLER |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82